# EUROPEAN PATENT APPLICATION

(11) **EP 2 693 386 A1**
(43) Date of publication of application: **05.02.2014**
(21) Application number: 12005548.8
(22) Date of filing: 31.07.2012
(51) Int. Cl.: G06Q 40/04, G06Q 40/06

(54) **Change management**

(71) Applicant: Vercauteren, Giselle, 9940 Evergem (BE)
(72) Inventor: Bhattacharya, Sukrit, 5036 SL Tilburg (NL); Vantieghem, Peter, 1730 Asse (BE); Peeters, Yves, 2070 Zwijndrecht (BE); Vercauteren, Giselle, 9940 Evergem (BE)
(74) Representative: Donné, Eddy

(57) **Abstract**

A method for change management in an entity, the method comprising
● determining the current status of the entity, wherein the current status includes determining a list of parameters associated with the entity;
● evaluating the list of parameters associated with the entity to ascertain a subset of parameters that will result in causing change to the entity;
● defining a change strategy for the entity based on at least one of the subset of parameters; and
● deploying the change strategy within the entity.

## Description

### TECHNICAL FIELD

This invention relates to the assessment and change management for an entity. More particularly, the invention relates to a method of, and a system for assessing the state of an entity and recommending change management with sustainability for the entity.

### BACKGROUND ART

Traditional measurement tools, such as surveys, are limited in their ability to assess the state of an entity. These tools that are commonly used are 'static' in that they measure a number of variables relating to one aspect of an entity, for example, people's attitudes, behaviors or actions at a single point in time. Reports provided using traditional measurement tools typically show averaged scoring related to each dimension measured. Several variables are often grouped by averaging single variables to form a larger composite variable. This is carried out to simplify complexity and to make sense of the data.

While such tools can provide limited assessment of certain aspects of the entity, these tools become unreliable and difficult to use when assessing more complex interactions between variables and when used to assess the impact that change has on the state of the entity. Usage of statistical analysis in establishing links between people's behavior, change that takes place in the entity and organizational performance outcomes, often leads to inconclusive results. Gross assumptions need to be made in relation to what influences the entity's performance. Good quality data is difficult to obtain and the analysis generally does not take into account the impact of multidimensional variables on performance outcomes nor does the analysis adequately allow for the impact of moderating variables that change the state of the entity. The work is time consuming and provides little practical value for the manager responsible for managing change and achieving business outcomes.

Therefore using traditional tools it is difficult to establish links to performance outcomes and it is not possible to model the impact of change on the entity adequately. In the absence of tools to clearly understand measure and manage variables associated with the entity, such entities continue to be guided by poor information.

### DISCLOSURE OF INVENTION

The invention discloses a method and system for assessing an entity, proposing a change management technique for the entity and sustaining the change management for the entity. In accordance with the embodiment of the invention, there is proposed a method and system for change management in an entity comprising determining the current status of the entity, wherein the current status includes determining a list of parameters associated with the entity; evaluating the list of parameters associated with the entity to ascertain a subset of parameters that will result in causing change to the entity; defining a change strategy for the entity based on at least one of the subset of parameters; and deploying the change strategy within the entity.

Embodiments of the invention further comprising creating a business case of the change required for an entity from at least one subset of parameters that will result in causing the change to the entity, and wherein the subset of parameters is associated with a strategic position of the entity. The subset of parameters comprises at least one of the organization structure or the stakeholders or factors associated with the economic position of the entity or social factors within the entity or factors associated with the technology of the entity or its leadership or the management of the entity.

Embodiment of the invention further comprises creating a business case by determining the critical factors affecting change of the entity; and assessing the critical factors to form a business case for change within the entity. The critical factors include one of entity reputation or entity culture or entity risk or operational costs or expected revenue generation or return on investment or impact of the entity or capacity of the entity to change, and wherein assessing the critical factors includes determining a cost associated with the change for the entity, and the cost associated with the change of the entity is optimized based on the subset of parameters. In further embodiment of the invention the optimization includes at least one of linear programming or non-linear programming or stochastic programming or convex programming or cone programming or quadratic programming.

### BRIEF DESCRIPTIPON OF DRAWINGS

**FIG. 1** illustrates an exemplary computer system on which the invention may be implemented.
**FIG. 2** illustrates an exemplary embodiment of the change concepts as envisioned.
**FIG. 3** illustrates an exemplary embodiment of a method describing change management lifecycle within an entity.
**FIG. 4** illustrates a methodology to define and understand the organizational reputation and to assess the entity's reputation.
**FIG. 5** illustrates a plot of the total score of the computation for assessing an organizations culture.

### DETAILED DESCRIPTION

As will be appreciated by a person skilled in the art, embodiments of the invention may be embodied as a system, method or computer program product. Accordingly, embodiments of the invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments of the invention may take the form of a computer program product embodied in any tangible medium of expression having computer usable program code embodied in the medium.

Any combination of one or more computer usable or computer readable medium(s) may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CDROM), an optical storage device, a transmission media such as those supporting the Internet or an intranet, or a magnetic storage device. Note that the computer-usable or computer-readable medium could even be paper or another suitable medium, upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to wireless, wireline, optical fiber cable, RF, etc.

Computer program code for carrying out operations of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Embodiments of the present invention is described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer program instructions may also be stored in a computer-readable medium that can direct a computer or other programmable data processing apparatus to function in a particular manner, such that the instructions stored in the computer-readable medium produce an article of manufacture including instruction means which implement the function/act specified in the flowchart and/or block diagram block or blocks. The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flowchart and/or block diagram block or blocks.

Embodiments of the invention provide a method, system and computer program product for purging inactive objects from an entity thereby reducing the size of the entity by producing a thinner entity. In one embodiment, the custom inactive objects are identified in a specified entity the identified custom inactive objects are purged from the specified entity. Once the inactive objects are purged, a report is generated dynamically identifying all the purged inactive objects.

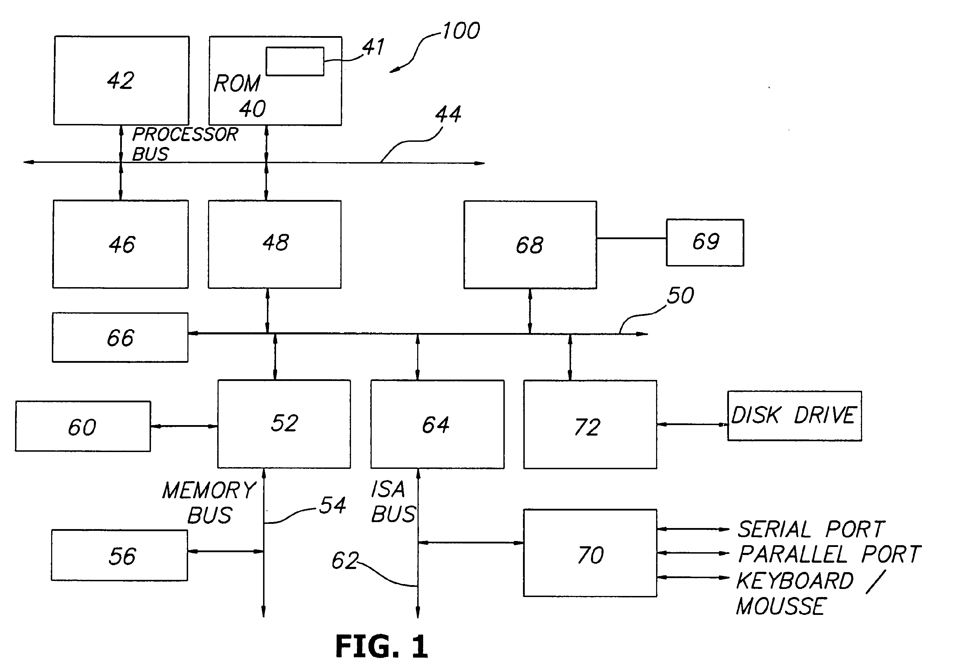

Reference is now made to **FIG. 1**, which depicts a block diagram of an exemplary embodiment of computer system **100** (any data processing system consisting at least a processor and a memory, capable of processing information/data). The exemplary computer system depicted in **FIG. 1** in one embodiment consists of a device having at least a processor and a memory, and for example covers electronic devices such as a laptop or desktop personal computer, a mobile/smart phone, PDAs or the like. As is apparent from the description, however that embodiments of the invention may be implemented in any appropriately configured device, as described herein.

As illustrated in **FIG. 1****,** computer system **100** includes at least one system processor **42,** which is coupled to a Read-Only Memory (ROM) **40** and a system memory **46** by a bus **44,** preferably a processor bus. System processor **42,** may include at least one of the AMD line of processors produced by AMD Corporation or a processor produced by INTEL Corporation or a processor produced by International Business Machines Corporation, such as a POWER processor, and is typically a general-purpose processor that executes boot code **41** stored within ROM **40** at power-on and thereafter processes data under the control of an operating system (not explicitly shown in the figure) and application software (not explicitly shown in the figure) stored in system memory **46.** System processor **42** is coupled via bus **44** and host bridge **48** to Peripheral Component Interconnect (PCI) local bus **50.**

PCI local bus **50** supports the attachment of a number of devices, including adapters and bridges. Among these devices is network adapter **66,** which interfaces computer system **100** to LAN, and graphics adapter **68,** which interfaces computer system **100** to display **69.** Communication on PCI local bus **50** is governed by local PCI controller **52,** which is in turn coupled to non-volatile random access memory (NVRAM) **56** via memory bus **54.** Local PCI controller **52** can be coupled to additional buses and devices via a second host bridge **60.**

Computer system **100** further includes Industry Standard Architecture (ISA) bus **62,** which is coupled to PCI local bus **50** by ISA bridge **64.** Coupled to ISA bus **62** is an input/output (I/O) controller **70,** which controls communication between computer system **100** and attached peripheral devices such as a as a keyboard, mouse, serial and parallel ports, et cetera. A disk controller **72** connects a disk drive with PCI local bus **50.** The USB Bus and USB Controller (not explicitly shown in the figure) are part of the Local PCI controller **52.**

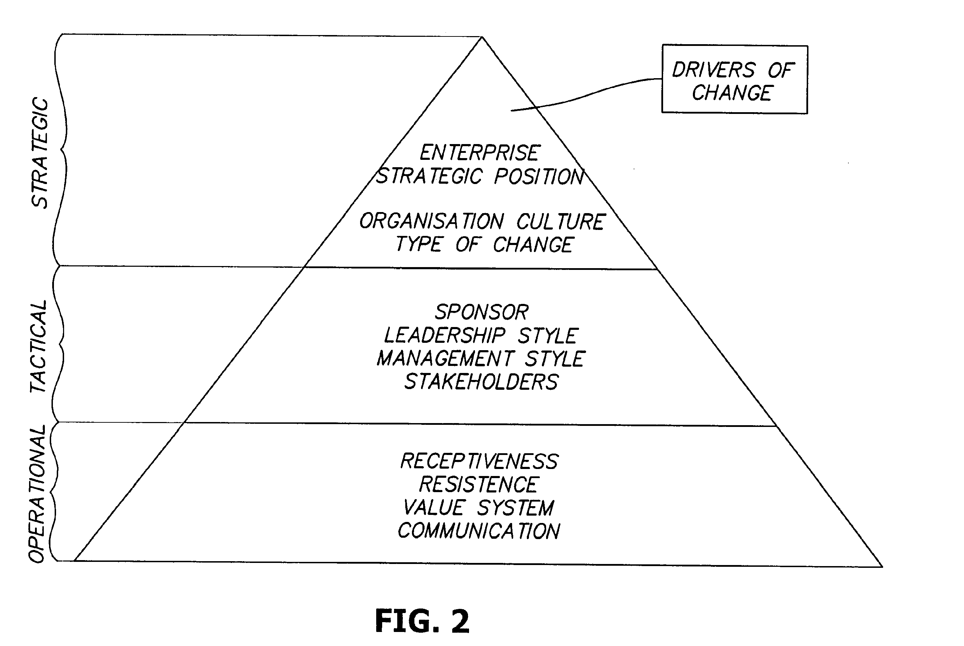

Reference is now made to **FIG. 2****,** which illustrates an exemplary embodiment of the change concepts as envisioned. At a very high level the embodiment of the invention has three key elements that can be recognized to bring in change management to an entity
i. the change concept
ii. the change management lifecycle
iii. the framework developed herein as the core elements that are critical in bringing change to an entity.

In accordance with the embodiments of the invention, the following change types can be handled within the framework of this invention entities, which for example include enterprise or organization related changes.

For example in an Organizational change the following parameters may be found to be critical in determining change management as managing at least one of the following: Acquisitions/mergers, Restructuring Re-organization, Change in business strategy. Other types of change includes for example, Technology change and/or Economical change which further includes parameters such as Business process change such as change management model to support CMMI, Six Sigma, EFQM, CoBIT, PMI, Prince 2, ...,) and/or Outsourcing/Off-shoring (it could also be part of organizational changes) and/or Business renewal (it could also be part of organizational change) and/or New business or new product (it could also be part of organizational change)

Embodiments of the invention do not apply to personal change within an entity. As illustrated in **FIG. 2****,** in accordance with the current invention the change concepts manifest in three layers, and is depicted by a triangle. The base layer is the operational layer which comprises factors such as responsiveness to change, resistance to change, the value system of the entity and communication with the entity - how effective the communication is within the entity. The second or middle layer is the tactical layer where the following parameters are seen, sponsorship of the entity, leadership style of the entity, management style within the entity and stakeholders of the entity. The topmost layer, which is defined as the Strategic layer, where the critical drivers for change management are identified as the strategic position of the entity and the culture within the organization, i.e., how adaptable is the organization to accept change management and sustain the change.

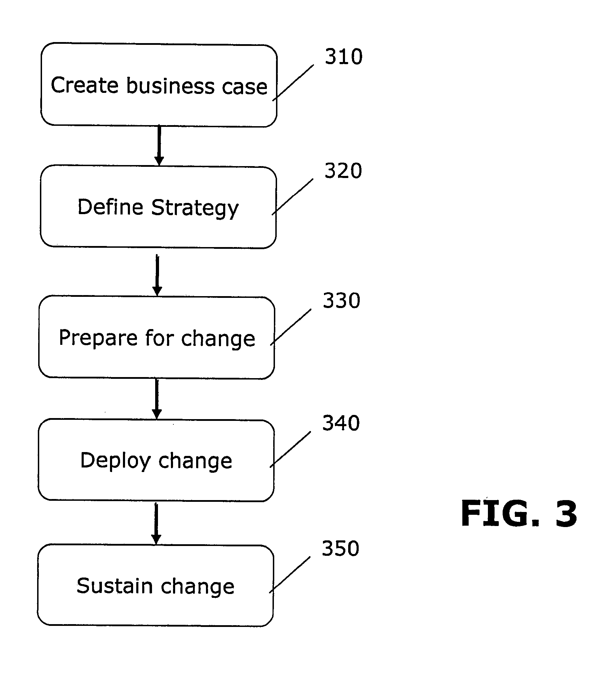

**FIG. 3** illustrates an exemplary embodiment of a method **300** for change management lifecycle within an entity. In step **310** business case for the change management is created for an entity. When it is determined that the business requires change management, there could be different categories that require this change management. An appropriate entity is identified within the global entity and a business case is prepared for the entity that requires the change management. In step **320** a mapping is created to the strategic layer of **FIG. 2****,** the content of applicable strategic layer and a change strategy is defined. In step **330,** once the strategy is defined, a mapping is created to the tactical layer of **FIG.** 2, and the entity is prepared for a change. Without proper preparation of change, the change management identified for the entity may fail. In step **340,** a mapping is made to the operational layer in **FIG. 2****,** and change management is deployed in the entity. Some of the key elements but not exhaustive in this phase of deploying change management is at least one of the following parameters Awareness of the change management within the entity and/or Receptiveness of change management within the entity and/or Resistance of the change management within the entity and/or Implementation of the change management within the entity and/or Sustainability of the change management within the entity and/or Evaluation of the change management process etc.

It should be obvious to one skilled in the art that these are only a few of the parameters that can be monitored during the deployment phase and there could be many other factors not mentioned here, but obvious and such parameters fall within the scope of the embodiments of the invention.

Specifically for the change concept before even being able to change or influence the behavior of people, it is very important to understand which drivers are behind the change and is typically done on all levels of the company: strategic, tactical and operational as illustrated in **FIG. 2****.**

To determine the strategic position of the organization if it has been defined and if it has changed, can be typically performed using an exemplary questionnaire as illustrated in Table 1 below. The table is only illustrative in nature and it should be obvious to one skilled in the art that various other parameters could be included in this tabular form as well.

**Table 1**

| | Questions | Yes | No |
|---|---|---|---|
| | A mission statement exists on paper (or on an accessible electronic media). | | |
| | The mission statement is published through internal newsletters, whiteboards in public places, on the intranet etc. | | |
| | Staff is aware of the existence of a mission statement. | | |
| | Staff invest efforts to actively contribute to the values stated in the mission statement. | | |
| | Staff is evaluated on their efforts to contribute to the values stated in the mission statement. | | |
| | A strategic plan exists on paper (or in an accessible electronic media) for at least one year. | | |
| | A strategic plan exists on paper (or in an accessible electronic media) for a longer period (several years). | | |
| | The strategic plan has clearly defined goals and targets on a corporate level. | | |
| | The goals and targets have been communicated to the middle management only. | | |
| | Goals and targets also exist on a departmental/regional/team level. | | |
| | The senior management has communicated the goals and targets to the entire organization. | | |
| | The specific goals and targets have been communicated by the senior management to the middle management and by the middle management to the operational staff. | | |
| | All staff are aware of their personal and team goals. | | |
| | Goals are not met for several months or years in a row. | | |
| | Goals are perceived as unrealistic. | | |
| | People have stopped worrying about the goals. | | |
| | There have been recent dismissals of staff. | | |
| | There is anxiety among the staff regarding past or possible future dismissals. | | |
| | There has been a recent social conflict involving trade unions (difficult discussions, strike, dismissals, resistance to reorganization, ...). | | |
| | The financial results of the company have deteriorated over the past two years. | | |
| | The company has lost important customers or contracts they have had for years. | | |
| | The company has used venture capital or private equity. | | |
| | The company has lost market share and competitors are in a stronger position than before. | | |
| | There have been changes in the board of directors. New directors have been appointed or important transactions of shares have taken place. | | |
| | There have been changes in the management committee. New executive managers have been appointed or people have recently left. | | |
| | Feedback on management from employees is bad. | | |
| | There are more complaints from customers. | | |

One of the main drivers of change is the position in which the entity finds itself at a certain point in time. A strategic position is represented by a number of factors that can be divided in a few categories. Any alteration or evolution in one or more of these factors may cause or influence change.

Economical position: these are commonly known and measurable factors like market share, Turnover, EBITDA, Competition, Productivity, Corporate strategy, etc.

Shareholders and board structure: Public listed company or privately owned, Number of board members + weight in terms of minority/majority shareholders, Personal or business relationships between board members linked to the company or outside the company, etc.

### Organizational structure:

● Matrix organization is the most common structure within larger companies where a single individual has more than one direct report. The individual can/will report to more than one physical person, e.g. the functional manager who can be in another country and the country manager.
● Line organization is characterized by a very flat structure where every individual reports to only one person who is at N-1 level.
● Line/staff organization is one where on a higher level there are specialized staff functions. They have an important advisory role but no decisional role.
● Network organizations exist typically within companies with large numbers of highly skilled and trained employees (clinical trial, R&D, health care) where the strategy is a consensus.

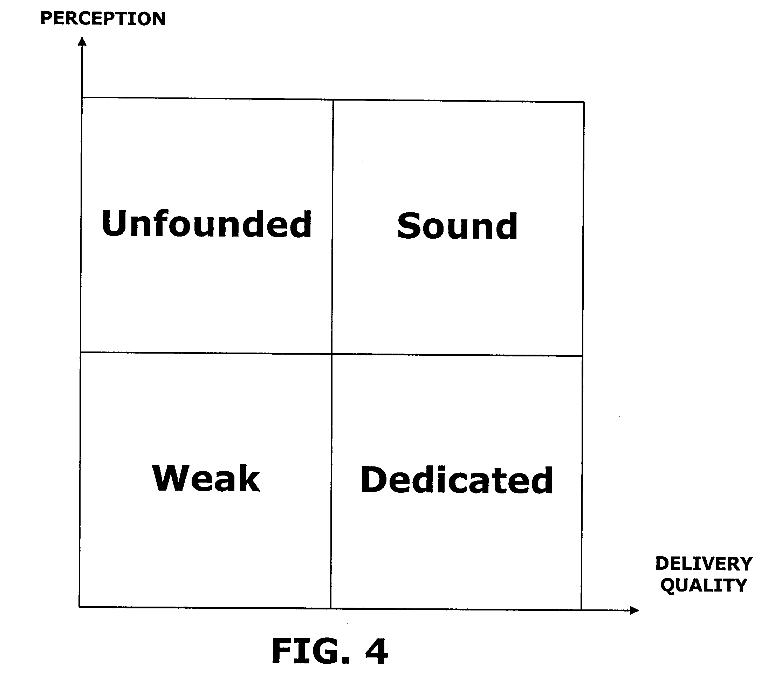

**FIG 4** illustrates a methodology to define and understand the organizational culture and to assess the entity's culture, which are illustrated in two-dimensions. **Socialization** is a dimension characterized by the degree of friendliness typically found among members of an organization and **Alignment** is the other dimension characterized by the degree to which people in an organization share a common understanding of the tasks and goals about which they are working.

The last factor in the strategic layer to determine the type of change or the drivers behind the changes is: No change is accidental. Each change falls within one of these categories:
● Economic change: Due to an evolution in the economical situation of the company a change is taking place. Typically this can be downsizing, reduction of staff, cost cutting etc. Also new product or activity launches come into this category.
● Structural and organizational change: Mergers, acquisitions, implementing a different organizational structure are the most common examples of this type of change.
● Technology change: Implementing new production lines or machinery, implementing new ICT systems (any ERP like SAP, Oracle or Siebel)

In the Tactical layer, A sponsor is a very widely spread notion. The most literal meaning of sponsor is "the person who makes a certain amount of funding available". Very often it is assumed that the role of the sponsor is limited to the role of budget holder.

Depending on the complexity and the scope of the change, it may be necessary to have two or more sponsors: Primary sponsor: Budget holder and member of the management committee and Business sponsor: Person accountable for the realization of the goals inducing the change.

Many initiatives are influenced, positively or negatively by the behavior and the position of the middle management. In any organization it is middle management that has great power for the following reasons: Often a long history at the same organization and a very strong informal network and/or A lot of business knowledge and competence, artificially protected or not and/or Most possibilities to influence operational people because the latter depend on middle management for distribution of work but also for a series of other services such as requests for new logistic or IT equipment, request for leave etc., and/or Middle management have contact with both senior management and operational people. They can change communications in either direction or hold communications.

The aim of assessing the leadership/management style is not to improve the way in which managers do their job but to assess how the change could be deployed, which change techniques could be used and what could be a realistic expectation for change outcome.

In the operational layer, the receptiveness to change is not at all a synonym for lack of resistance. In all the traditional change models, there are long chapters about resistance. Of course a human being resists change! But the real question is: why? The answer is: people are resisting change because they are not receptive enough for the change. Or in simple language: the "WIIFM" (What's In It For Me) question is not answered. Let us rephrase the WIIFM question: does there have to be something in it for them? Indeed, the receptiveness is directly proportional to the value of "WIIFM".

Resistance mainly has to do with the comfort zone any human being needs. This comfort zone is affected if people need to move physically, if a new manager is appointed, if the technical means to carry out the work are changed etc.

Receptiveness is measured by "how badly" people want the change and the extent to which people are prepared to adapt their behavior to support the suggested change. Any organization has "early adopters" and "non believers". Influencing receptiveness is about getting people to adopt the change and change their behavior gradually but swiftly and without losing their comfort zone. Using a receptiveness checklist one can determine the degree of receptiveness of the individuals affected by the change. Examples of factors that influence receptiveness are: people do not understand the reason why they should change or they are afraid of making a fool of themselves by a sudden change in behavior. In organizations where the management leads by example, this confusion does not arise and people are clear about the rationale why they should change their behavior.

An important consideration to take into account on an operational level is the value system within an organization. This may highly influence the behavior of individuals because the value system is either responsible for the position of the individual within the organization or the financial remuneration of the employee on all levels. With value system not only a set of moral codes but also the system to reward and appraise an employee is established. Some examples of value system are:
Shoulder tapping - The employees are not really told how to behave and what targets to achieve. There are hardly any bonuses and the main reward is either a personnel party once per year or a family event. Communication and reporting lines are often very informal. Feedback on work is given immediately and people do not like to bring bad news to colleagues or co-workers.
Punish and reward - A strict set of moral codes exists within the company. Not all of these codes are documented but it is very important to know and respect them. Hierarchy monitors the respect of the codes and appeal to their co-workers if their behavior does not fit the code. There is a formal mechanism of feedback to employees and there is a formal appraisal system. Each employee is given a set of individual goals each year. Not always is the achievement of these goals a guarantee that this will be financially appraised but it is used as input.
Bonus hunting - No moral codes exist. There are only targets and bonuses to win. It is either win or lose. Even if employees are asked to "over perform" according to moral codes that would exist in other organizations, employees are compensated through extra advantages.

There are various stages in the change lifecycle that will now be discussed below:
**1. Create Business Case of the change -** Most changes either do not succeed or fail to yield expected result due to lack of a defined business case. In accordance with the embodiments of the invention a high importance is placed on a business case for change before embarking on it. It provides the approach to make a business case to justify starting a Change.

To create the business case for a product or a service, typically five aspects are considered: Cost, Expected revenue generation, NPV (or ROI) analysis, Risk, Impact/influence.

But Change is not a product or service. Unfortunately most changes do not lead to provable direct revenue generation. In addition, the cost of implementing and sustaining a change poses difficulty in allocation of cost. So in accordance with the embodiments of the present invention instead of cost-benefit analysis we propose a Value analysis by mapping "risk of not changing" and "risk of not managing change" to potential value earned. There are also certain difficulties encountered in the change business case
● Revenue generated by Change: As explained in the "Change Concepts", there are three types of change, out of which only 'economic change' has a definitive "revenue" target (realized through cost reduction). Structural change and Technology change poses extreme difficulty in correct forecasting of revenue generated by the change.
● Cost of change: In all three types of change, there are two cost types:
   o Direct cost of change: These are the costs that can be allocated through any financial system. Some examples are - Cost of person hours of change manager, Cost of person hours of change ambassadors, Cost of tools purchased, Licensing cost, Cost of tool deployment (covering training, hand-holding, infrastructure and service cost), Cost of acquisition and commissioning of methodology (e.g. CMMI), Cost of person hours in training and related activities.
   o Indirect cost of change: These are the costs incurred which cannot be easily allocated through a typical financial system, examples are - Cost of lost revenue, Cost of reduced productivity (in most cases temporary), Cost of resistance, Cost of redundancy (in most cases temporary).

Most of the indirect cost comes from the cost of change deployment. For a change to succeed, the objective should be translated to a simple intention that maps to two aspects for people - Security and Benefit

To overcome these difficulties, embodiment of the invention look into three focus areas during the creation of business case:
● **Reputation** of the organization or the part of the organization that is implementing the change (in terms of its perception in the other parts of the organization or outside the organization and the quality of its deliveries)
● **Culture** of the organization where the change will be deployed (in terms of Socialization and Alignment)
● **Risks**
   o Risk of not implementing the change in terms of - Lost revenue, Customer dissatisfaction, People dissatisfaction, Lost opportunities, Loss in reputation, Losses incurred from Legal and Legislative regulations
   o Risk of not managing the change - Number of people affected by change, Criticality of the people affected by the change, People dissatisfaction, Loss in reputation, Lost opportunities

The three following templates are proposed to cover these three focus areas: first, Reputation assessment model (questionnaire to map the organization that is responsible for implementing the change) places the organization in a 4 quadrant structure: Weak, Unfounded, Sound, Dedicated; second, Organization culture assessment model (questionnaire to map the organization where change will be deployed) places the organization in a 4 quadrant structure: Shark, Whale, Dolphin, Piranha; and third Risk assessment model (questionnaire to assess the risks in the areas explained above).

Based on the three assessments, a framework is defined for assessment of the value associated with the change.

To create a business case, the following algorithm is followed:
Is there a business case? If yes,
Check the business case for change (have all change aspects been covered?), if yes Go to Define Change Strategy, else
   o Risk of change: if the risk assessment conducted covers all people and change aspects, no modification needed
   o Else
      o Reputation assessment (if relevant areas are covered). If yes, no modification
         ■ Else Conduct full reputation assessment if the size and nature of change justifies it OR conduct a tailored version of reputation assessment. Use the findings to update the risk assessment
      o Culture assessment (if relevant areas are covered). If yes, no modification needed
         ■ Else Conduct full assessment if the size and nature of change justifies it OR conduct a tailored version of culture assessment. Use the findings to update the risk assessment
   o If there is no risk assessment done, create a risk management structure (covering risk of not changing and risk of unmanaged change) based on reputation assessment and culture assessment
   o Modify the business case based on learning
   o Map the result to the change concepts - what will work and what will not
.For any assessment that have already been conducted by the customer, the following intoned verification:
   o The assessment process
      o Who participated
      o What were the questions asked
      o How was the assessment done (guided, self, interviews, etc.)
   o The result
   ο The usage of assessment findings

Based on all those a tailored version of the assessment is conducted to bridge the gaps that still exist in the assessment process, result and usage. The process to create Business Case of the Change runs through the following process steps of Mapping the change necessity to Strategy, Conducting Reputation assessment; Conducting Culture assessment; Conducting Risk assessment; Consolidating Business Case for change.

Now the change necessity should be mapped to the Strategy as shown in Table 2 below:

**Table 2**

| **Task** | **Responsibillity** | **Accountability** | **Consulting** | **Informed** |
|---|---|---|---|---|
| Assess if the strategic direction differs from present situation | Business owner; Functional owner; Group Head | Level 1 Managers or Management Team of the organization (enterprise) | Other Business Owner, Functional Owner, Group Head | Level 2 Managers or Management team of the business, function or group |
| Evaluate the necessity of change to follow strategic direction | Business owner; Functional owner; Group Head | Level 1 Managers or Management Team | Other Business Owner, Functional Owner, Group Head | Level 2 Managers or Management team of the business, function or group |
| Appoint Change Manager or allocate responsibility to a senior member of the team to create business case | Level 2 Managers or Management team of the business, function or group | Business owner; Functional owner; Group Head | Process group; Other Business Owner, Functional Owner, Group Head where similar change had been or is being implemented | Level I Managers or Management Team |
| List high level objectives and desired targets of the change based on strategic mapping | Change Business Case responsible or Change Manager | Level 2 Managers or Management team of the business, function or group | Process group; Other Business Owner, Functional Owner, Group Head where similar change had been or is being implemented | Level 1 Managers or Management Team of the organization |

After this a Reputation Assessment is conducted as shown in Table 3 below:

**Table 3**

| **Task** | **Responsibility** | **Accountability** | **Consulting** | **Informed** |
|---|---|---|---|---|
| Identify the team or group or part of the organization that will implement the change | Change Business Case responsible or Change Manager | Level 2 Managers or Management team of the business, function or group | Process group; Other Change Manager where similar change had been or is being implemented | People or group implementing the change |
| Identify the team or | Change Business | Level 2 Managers | Process group; Other | People or |
| the part of the organization where the change will be deployed | Case responsible or Change Manager | or Management team of the business, function or group | Change Manager where similar change had been or is being implemented | group where the change will be deployed |
| Identify assessment participant(s) that will fill in the perception part of the questionnaire from the team or part of organization where the change will be deployed | Level 2 Managers or Management team of the business | Change Business Case responsible or Change Manager | Process group; Other Change Manager where similar change had been or is being implemented | People or group where the change will be deployed |
| Identify assessment participant(s) that will fill in the Delivery quality part of the questionnaire from the team or part of organization that will be implementing the change | Level 2 Managers or Management team of the business | Change Business Case responsible or Change Manager | Process group; Other Change Manager where similar change had been or is being implemented | People or group implementing the change; |
| Conduct assessment | Change Business Case responsible or Change Manager | Level 2 Managers or Management team of the business, function or group | Process group; Other Change Manager where similar change had been or is being implemented | People or group implementing the change; People or group where the change will be deployed |
| Evaluate result and finalize score; eliminate redundancy and remove bias (if necessary using standard deviation analysis) | Change Business Case responsible or Change Manager | Level 2 Managers or Management team of the business, function or group | People or group implementing the change; People or group where the change will be deployed | Process group; Other Change Manager where similar change had been or is being implemented |
| Set reputation position of the organization or team or group that will implement the change | Change Business Case responsible or Change Manager | Level 2 Managers or Management team of the business, function or group | Process group; Other Change Manager where similar change had been or is being implemented | Level 1 Managers or Management Team of the organization |

An example checklist for Reputation assessment is illustrated in Table 4 below:

**Table 4**

| *Filled by customer* | | | | | | |
|---|---|---|---|---|---|---|
| | | Strongly disagree | Disagree | Neither agree nor disagree | Agree | Strongly Agree |
| A1 | This organization's business plan fits into the overall strategy of our company | 1 | 2 | 3 | 4 | 5 |
| A2 | This organization is a crucial entity within our company - without them performance of our company will suffer | 1 | 2 | 3 | 4 | 5 |
| A3 | We know what this organization does or is supposed to do | 1 | 2 | 3 | 4 | 5 |
| A4 | This organization is transparent: we know its organization structure and hierarchy | 1 | 2 | 3 | 4 | 5 |
| A5 | This organization has grown consistently in the past years | 3 1 | 2 | 3 | 4 | 5 |
| A6 | The people in this organization are competent | 1 | 2 | 3 | 4 | 5 |
| A7 | In case of a problem or defect we know who to contact in this organization | 1 | 2 | 3 | 4 | 5 |
| A8 | This organization has received awards or commendations for its performance in the past 3 years | 1 | 2 | 3 | 4 | 5 |
| A9 | The people in this organization are friendly and sensitive to our problems | 1 | 2 | 3 | 4 | 5 |
| A10 | In the last one year this organization did not lose any significant workforce | 1 | 2 | 3 | 4 | 5 |
| A11 | The products and/or services from this organization meet our expectation | 1 | 2 | 3 | 4 | 5 |
| A12 | This organization tries its best to support us | 1 | 2 | 3 | 4 | 5 |
| A13 | We are satisfied with the response time from this organization | 1 | 2 | 3 | 4 | 5 |
| A14 | In the last one year we had no significant dissatisfaction with this organization | 1 | 2 | 3 | 4 | 5 |
| A15 | Technology and tools used by this organization is reliable | 1 | 2 | 3 | 4 | 5 |

| *Filled by Stakeholder* | | | | | | |
|---|---|---|---|---|---|---|
| | | Strongly disagree | Disagree | Neither agree nor disagree | Agree | Strongly Agree |
| B1 | The last product/service from the organization was delivered within budget (or within tolerance limit) | 1 | 2 | 3 | 4 | 5 |
| B2 | The organization delivered the last product/service within schedule (or within tolerance limit) | 1 | 2 | 3 | 4 | 5 |
| B3 | The last product/service delivered all the requirements that were asked for | 1 | 2 | 3 | 4 | 5 |
| B4 | During last product/service release this organization informed its customers of known deficiencies to prepare them in advance | 1 | 2 | 3 | 4 | 5 |
| B5 | The defect report for the last product before release showed a steady down trend of open defects | 1 | 2 | 3 | 4 | 5 |
| B6 | The defect report showed that defect resolution rate was faster than defect injection rate for a sufficient period before the product was released | 1 | 2 | 3 | 4 | 5 |
| B7 | Quality at delivery for the products and services over the last three years have been above the company average | 1 | 2 | 3 | 4 | 5 |
| B8 | In the last three years this organization met most of the quality targets assigned to it from the Company | 1 | 2 | 3 | 4 | 5 |
| B9 | This organization's mission statement indicates Quality as a major focus | 1 | 2 | 3 | 4 | 5 |
| B10 | The mission statement is published through various channels: e.g. internal newsletters, whiteboards in public places, on the intranet etc. | 1 | 2 | 3 | 4 | 5 |
| B11 | Staff make effort towards active contribution to the values stated in the mission statement. | 1 | 2 | 3 | 4 | 5 |
| B12 | Staff is evaluated on their efforts to contribute to the values stated in the mission statement. | 1 | 2 | 3 | 4 | 5 |
| B13 | A strategic plan or roadmap exists for at least one year on paper or in a formal set-up/template for this organization | 1 | 2 | 3 | 4 | 5 |
| B14 | The strategic plan or roadmap defines goals and targets on a corporate level and tries to map to the company goal and target | 1 | 2 | 3 | 4 | 5 |
| B15 | The goals and targets have been deployed beyond middle management to the team level | 1 | 2 | 3 | 4 | 5 |
| B16 | The staff strives to achieve the goals and targets assigned to them | 1 | 2 | 3 | 4 | 5 |
| B17 | During the last three years the organization has hardly dismissed any people | 1 | 2 | 3 | 4 | 5 |
| B18 | There is no anxiety among the staff regarding possible future dismissals | 1 | 2 | 3 | 4 | 5 |
| B19 | The financial results of the organization have been consistently on target | 1 | 2 | 3 | 4 | 5 |
| B20 | In the defect log there is no open defect at this moment that is not allocated to a person | 1 | 2 | 3 | 4 | 5 |
| | | | | | | |

| Performance | | | | | | |
|---|---|---|---|---|---|---|
| *Summarize following questions:* | | | | | | |
| A1 +A3 +A5 +A7 +A8 +A9 +A11 +B1 +B2 +B5 +B6 +B12 +B13 +B15 +B17 +B19 +B20 = | | | | | | |
| | | | | | | |

| Perception | | | | | | |
|---|---|---|---|---|---|---|
| *Summarize following questions:* | | | | | | |
| A2 +A4 +A6 +A10 +A12 +A13 +A14 +A15 +83 +84 +87 +88 +89 +B10 +B11 +B14 +B16 +B18 = | | | | | | |

The assessment result can be illustrated below:
**Weak:** Characterized by people being part of an organization that has consistently produced low quality deliverable over the last year and subsequently earned low reputation from its customers. Typically people in this type of organization follow weak business processes and suffer from a lack of self-confidence. In many cases the tool and technology in these organizations are outdated.
**Unfounded:** Despite producing low quality deliverables these organizations have earned a good reputation and are perceived as high performer. Typically people in these organizations suffer from over confidence, have excellent marketing skills and are led by a leader with charisma and influence. Business processes, tools and technology in these organizations are weak and outdated.
**Sound:** Such organizations are characterized by very strong disciplined deliverables of high quality. They are also perceived as high performers by their customers. Typically people in such organizations are proud to be its part and are open to criticism. They go out of their way to support their customers.
**Dedicated:** Such organizations produce high quality products but are unfortunately perceived as low performers. People in such organizations lack marketing skills and are sometimes too technical in their dealings therefore not understanding underlying customer need. Communication skill of the people in such organizations sometimes is also inadequate.

Approach to reputation assessment and the questionnaire must be tailored to each individual organization need.

An Organization Culture Assessment is conducted to map the organization as below:

**Table 5**

| **Task** | **Responsibility** | **Accountability** | **Consulting** | **Informed** |
|---|---|---|---|---|
| Identify assessment participant(s) that will fill in the questionnaire | Level 2 Managers or Management team of the business, function or group | Change Business Case responsible or Change Manager | Process group; Other Change Manager where similar change had been or is being implemented | People or group where the change will be deployed |
| Conduct assessment | Change Business Case responsible or Change Manager | Level 2 Managers or Management team of the business, function or group | Process group; Other Change Manager where similar change had been or is being implemented | People or group where the change will be deployed |
| Evaluate result and finalize score; eliminate redundancy and remove bias (if necessary using standard deviation analysis) | Change Business Case responsible or Change Manager | Level 2 Managers or Management team of the business, function or group | People or group where the change will be deployed | Process group; Other Change Manager where similar change had been or is being implemented |
| Set Organization Culture position of the organization or team or group where the change will be deployed | Change Business Case responsible or Change Manager | Level 2 Managers or Management team of the business, function or group | Process group; Other Change Manager where similar change had been or is being implemented | Level 1 Managers or Management Team of the organization |

An example checklist for Culture assessment is illustrated in Table 6 below:

**Table 6**

| | | | | | | |
|---|---|---|---|---|---|---|
| Please indicate how strongly you agree or disagree with the following statements about your organization. Once you have completed the survey, please enter the score (1-5) for each statement in the boxes under the corresponding question numbers at page 3. Finally, plot your scores on the graph on the last page. Your scores can be used as input for the business case on change, for defining the change strategy and for the preparation of the change. | | | | | | |
| | | | | | | |

| | | Strongly disagree | Disagree | Neither agree nor disagree | Agree | Strongly Agree |
|---|---|---|---|---|---|---|
| 1 | People at my company know the organization's business objectives clearly. | 1 | 2 | 3 | 4 | 5 |
| 2 | People at my organization genuinely like one another | 1 | 2 | 3 | 4 | 5 |
| 3 | People follow clear guidelines and instructions about work | 1 | 2 | 3 | 4 | 5 |
| 4 | People get along very well and conflicts are rare | 1 | 2 | 3 | 4 | 5 |
| 5 | Poor performance is dealt with quickly and firmly in my organization. | 1 | 2 | 3 | 4 | 5 |
| 6 | People often socialise outside of work | 1 | 2 | 3 | 4 | 5 |
| 7 | People realy want to beat the competition | 1 | 2 | 3 | 4 | 5 |
| 8 | People do favours for each other because they like one another | 1 | 2 | 3 | 4 | 5 |
| 9 | When opportunities for competitive advantage come up people move firmly to capitalize on them | 1 | 2 | 3 | 4 | 5 |
| 10 | People make friends for the sake of friendship - there is no other agenda | 1 | 2 | 3 | 4 | 5 |
| 11 | The strategic goals of the organization are known and shared. | 1 | 2 | 3 | 4 | 5 |
| 12 | People often confide in one another about personal matters | 1 | 2 | 3 | 4 | 5 |
| 13 | People build close long-term relationships - someday they may be of benefit | 1 | 2 | 3 | 4 | 5 |
| 14 | The reasons for reward and punishment are clear at my organization | 1 | 2 | 3 | 4 | 5 |
| 15 | People know a lot about each other's families | 1 | 2 | 3 | 4 | 5 |
| 16 | People in my team are determined to beat our industry competitors | 1 | 2 | 3 | 4 | 5 |
| 17 | When faced with problem, people first check what friends and colleagues have already done, then attempt to solve it by themselves | 1 | 2 | 3 | 4 | 5 |
| 18 | Hitting targets is the single most important thing in my organization | 1 | 2 | 3 | 4 | 5 |
| 19 | To get something done you are allowed to work around the system | 1 | 2 | 3 | 4 | 5 |
| 20 | Projects that are started reach an end state within finite and defined period | 1 | 2 | 3 | 4 | 5 |
| 21 | When people leave, co-workers stay in contact to see how they are doing | 1 | 2 | 3 | 4 | 5 |
| 22 | Roles and responsibilities are formal : it is clear where one person's job ends and another person's begins | 1 | 2 | 3 | 4 | 5 |
| 23 | People protect each other at my organization | 1 | 2 | 3 | 4 | 5 |
| 24 | Poor performance is not tolerated at any level within this organization | 1 | 2 | 3 | 4 | 5 |
| 25 | In case a project cannot be completed or successfully realized, it is formally closed with lessons learnt documented and intermediate results archived | 1 | 2 | 3 | 4 | 5 |
| | | | | | | |

| Socialization dimension: *Summarize following questions:* | | | | | | |
|---|---|---|---|---|---|---|
| 2 + 4 + 6 + 8 + 10 + 12 + 13 + 15 + 17 + 19 + 21 + 23 = | | | | | | |

| Alignment dimension: *Summarize following questions:* | | | | | | |
|---|---|---|---|---|---|---|
| 1 + 3 + 5 + 7 + 9 + 11 + 14 + 16 + 18 + 20 + 22 + 24 + 25 = | | | | | | |

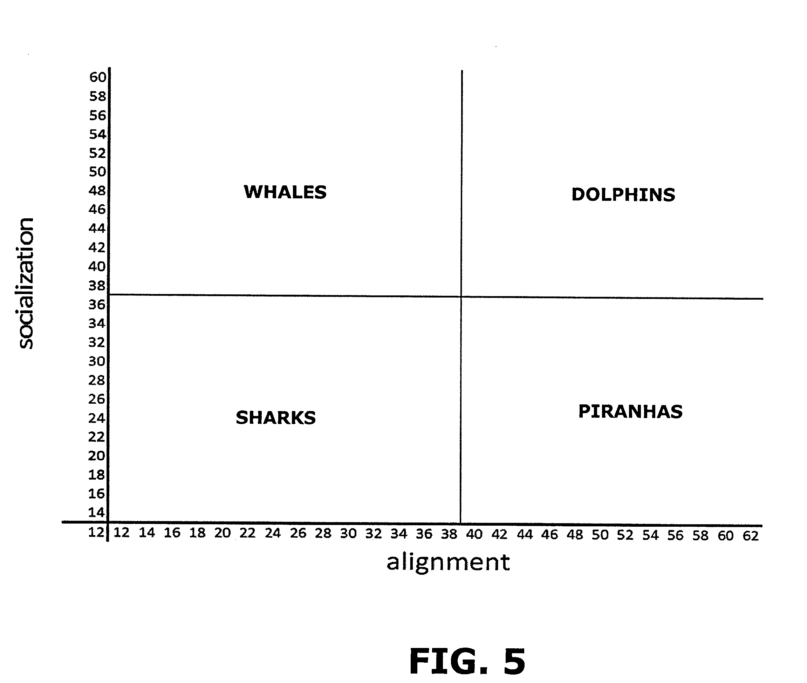

**FIG. 5** illustrates a plot of the total score of the computation. The interpretation is as follows:
**Sharks:** Characterized by individual high skilled people within their own individual comfort zone. So the approach is to work on sustaining the comfort zone. A top down approach individualized towards each people by empowering the individual comfort zone will work. High cost. Any change must be tailored to suit an individual's intellectual comfort zone. Also team-building session with focus on an area that does not fall under any of the participant's individual intellectual comfort zone could be a powerful tool. Personal individualized coaching and team-building.
**Whales:** Characterized by highly communicative people sharing personal details with colleagues. So change could be low cost. Events with powerful communication can be a good tool. It is possible to invite all employees of the complete organization in an evening to an event. The post event drink session can be used too for communication. Risk is that failure in one part of the organization can lead to total failure. Identifying leaders could also be a challenge.
**Dolphins:** Such organizations are characterized by very strong culture and "one of us" or "them" syndrome. Typically very large organizations fall in this category. Identifying right change ambassadors could be a challenge. The top down empowerment of change ambassadors through the stakeholders is a possible approach. Ideally most change ambassadors should be stakeholders. Coaching of the stakeholders and a top down approach can work. A formal communication plan with formal channels will work (Seminar, White board, Corporate journal, etc.).Existing network channels should be used.
**Piranhas:** Strong goal, extreme targets, high skill level and very high reward system driving people to overwork and burn out characterize such organizations. Usage of bonus system, incentives for change, team-building appealing to individual's career interest, setting challenging target tied to incentive and tailoring the change system into a target system will work very well for such organizations.

Approach to culture assessment and the questionnaire must be tailored to each individual organization need.

### Risk Assessment

Assessing risk for a change must be done in a team. The person responsible for defining the Change business case and the management team of the group or organization that will deploy the change will select a team of assessors. The selection criteria can be one of Knowledge of business and operation of the organization and/or Understanding of the necessity for change and/or Sufficient seniority and credibility and/or Analysis skills and/or Synthesis skills.

The Business Case responsible or Change Manager can even allocate specific areas where each assessor would focus. Typically the Change Manager or Business Case Responsible would moderate such an assessment. The assessment would identify risk from two angles: Risk of not changing at all and/or Risk of unmanaged change.

The assessors would map each risk to the business value aspect. A template is proposed to fill in the risk management plan. For assessment a questionnaire is designed as sample. This questionnaire is very generic and will need to be tailored to each change situation. There can even be tailored question per organization.

Assessment of Change Capacity: At this stage it is important to assess the capacity of the organization to change. Capacity to change depends on a number of factors. A few samples that evaluates the capacity along with their interpretation is shown in Table 7 below:

**Table 7**

| | | | | | |
|---|---|---|---|---|---|
| What is the size of the organization where the change is being deployed? | <10: Very good | 10-100: Good | 100-1000: Moderate | 1000-10000: Poor | >10000: Very poor |
| What was the attrition rate last year in percentage? | <1: Very good | 1-2: Good | 2-5: Moderate | 5-10: Poor | >10: Very poor |
| What is the average number of years employees stay in this organization? | <1: Very poor | 1-2: Moderate | 2-5: Very good | 5-10: Moderate | >10: Very poor |
| Is investment needed for any change that starts deployment accepted by the top management? | Always: Very good | Mostly: Good | Often: Moderate | Rarely: Poor | Never: Very poor |
| How much workforce in this organization is already affected by another change? | About three fourth: Very poor | More than half: Poor | Over a quarter - less than half: Moderate | Less than quarter: Good | Hardly any: Very good |

| | | | | | |
|---|---|---|---|---|---|
| 'Very good' indicates very high change capacity while 'Very poor' indicates very low change capacity. | | | | | |

Redundancy elimination and bias removal: Any survey needs a careful selection of participant. After the survey before the result is published, the data is validated. Typically in such surveys, there are two aspects that are looked at:
Data redundancy: If participants are not selected carefully and/or if the participants do not undertake the assessment (by some participant being absent), it is possible that one particular part of the organization is over represented while some other part of the organization is under represented. Then it is the responsibility of surveyors to eliminate the redundancy and make the representation as well rounded as possible.
Data bias: Typically when there are scores that come well within an upper and a lower limit (a data band), there could be exceptions where few particular data points are highly skewed (e.g. we take a survey with 25 people. On a score of 10, 23 data points fall between 4 and 7, while one data point shows 0 and the other 10. Normal survey techniques will exclude those two extremities from the calculation). Since these surveys will be anonymous, it will be impossible to ascertain whether there was a genuine reason for such skewed data or whether it was a mistake. In such a situation the safest way of ensuring data consistency and accuracy is to eliminate such skewed data points.

Based on the results of reputation, culture, risk and change capacity assessments, this invention maps an organization and identifies change expectation, change techniques applicable, tools necessary and an approach to Change Strategy.

**Define Change Strategy:** Is there a strategy -- If yes, check if the strategy is detailed and clear enough? If not, look into Risk list (assessment findings) and/or Mapping of the assessment findings into change concepts (outcome of reputation and culture assessment) and/or Any input for change size and change type.

### Activities:

Assess enterprise strategic position (and if the strategic position has changed). This will cover Market share and/or Competitor position and/or Influence from external bodies/authorities and/or Share price and/or Customer perception and/or Media attention (negative/positive) and/or Recent change in market position and/or Recent product failure and/or Staff dismissals
Refine/fine tune change size and change scope
Create the Governance model
Identify the behavioral changes needed from Sponsor and/or Stakeholder and/or Customer
Create the list of change tools and change techniques that will be used.
Translate that to the change needed which is realizable to define strategy.

Change type and/or Change size and/or Approach: for example via implicit leaders (Change Agents) -> Ambassadors of change (Change Evangelist) and/or Scope and/or Behavioral change (could be different for different stakeholders and different customer segments) and/or Expected behavior from stakeholder and/or Middle Management and/or Expected behavior from customer and/or People and/or Desired behavior of sponsors and/or Cultural change and/or Level of risk (how big is the risk such that we can identify the correct change management strategy to de-risk) and/or Governance model for the change program: Change Steering Committee, high level structure and/or change program: Change Steering Committee, high level structure.

**Prepare for Change** includes - Change management team and/or 0, 1 or more project managers and/or Capacity for change evaluation and/or Leadership assessment and/or Organizational value system and/or Leadership style and/or Military style (e.g. Japanese approach) and/or Democratic style (e.g. Holland approach) and/or Coaching-Empowerment style (e.g. Swedish approach?) and/or Power distribution and/or Intellectual capability and/or Capability to motivate and/or Capability to influence and/or Self motivational capability and/or Roadmap and/or Sponsorship coaching plan [a plan to align the Sponsor with desired behavioral pattern from Sponsor] and/or Stakeholder motivational plan [a plan to create motivational environment so that the middle management is motivated to display expected behavior] and/or Project plan for change and/or Constraints, dependencies, assumptions, barrier, road blocks and/or Re-evaluate the risks of not changing since now we have a change strategy (not IT risk) and/or Assess the risk in implementation based on leadership assessment, type of change and change management team [including typically de-motivation, fear, anxiety, apathy or frustration of stakeholders] and/or Measurement points for empirical evaluation (e.g. we use the change ambassadors to collect feedback of change deployment from the stakeholders) and/or Communication approach (channel and technique)

**Deploy the change** covers Awareness, Receptiveness/Resistance, Implementation, Sustainability, Evaluation.

Awareness - Ambassador role and/or Internal and external drivers, soft values, rationale for "Why" and creation of motivational elements for customer. In "Prepare for Change" the risks of not doing the change is identified and a change management plan is created. But to succeed, to the entity needs to overcome the risks in implementation and that can be done through creation of motivational elements in the content of change. This will eventually drive the communication plan and/or Risk management plan for Risk in implementation and/or Communication plan (e.g. same message multiple times).

Receptiveness/Resistance includes Mentally ready as Strong visible leadership and/or Engaged ambassadors and/or Management approach for resistance and/or Management approach for barriers and/or Customer involvement and/or Incentives and/or Passive communication and re-assurance from stakeholders to cull the source of resistance (de-motivation, frustration, fear, apathy, ...), and further includes Ready with right knowledge (know-how, technology) and/or Ready with appropriate tool.

Implementation includes Initiate change implementation process further consisting of two possibilities in implementation that go in parallel Top-down: Sponsor -> Stakeholder and Bottom-up: Ambassador -> Peer (sphere of influence based on peer to peer strategy). Further included is Tailoring the change implementation process to the organization culture consisting of Informal model of change implementation: peer-to-peer strategy. Objective is to Empower ambassadors and/or Free-up time of ambassadors and/or Enable ambassadors to be the example of the future state of the enterprise, and further includes Ambassadors will identify their sphere of influence and "spread" or "infect" the change and/or Sphere of influence will grow and/or new change ambassadors will be created and/or Eventually change will be deployed across the desired organizational area by steps like, Follow the project plan for change -Propose team building, if needed and/or Enlargement of peer to peer approach for change "spreading" and/or Train, if needed Motivate and/or Enable and/or Conduct events, if needed and/or "Coerce" if needed and/or Work on ambassadors to empower them - explain their role, make them stand up based on direct empowerment through sponsor and/or In parallel work on the stakeholders such that they create adequate time and space for the ambassadors and/or Create feedback loop through reverse appraisal or 360 degree appraisal (at least in scope of the change program) and/or Map the change implementation approach to the organization style, for example Sharks: (e.g. Public sector, university, research establishment) Top down per individual or Whales: Work with ambassadors or Piranhas: Top down or Dolphins: Top down and ambassadors and/or Map the change implementation to leadership style, for example Holland (Democratic approach): Ambassadors or Sweden (Empowered approach): Top down and ambassadors or Japan (Military approach): Top down and Follow communication plan.

Sustainability includes the following: Conduct intermediate evaluation of results and/or Collect feedback - Sponsor, Stakeholder, Customer and/or Celebrate successes and/or Reward and/or Capture lessons learnt from failures and/or Sustainability plan: Assuring top-down meets bottom-up and/or Objective measurement of deployment and/or Repeat communication and/or Address gaps based on feedback and/or Implement lessons learnt and/or Re-train (reinforce the message)

Evaluation includes to Collect feedback on change process - Sponsor or Stakeholder or Customer and/or Capture lessons learnt about change process for future change - What went well or What failed and/or Evaluate risk management and/or How did we perform in managing the deployment risks and/or Capture lessons learnt for future change **Keep-up** includes to Re-evaluate the business case and/or Re-assess the risks identified in the business case and/or Evaluate if the drivers are still the same and/or Tailor action to change type (as needed) and/or Capture result of risk re-assessment as benefit realization. While it is apparent that the invention herein disclosed is well calculated to fulfill the objectives discussed above, it will be appreciated that numerous modifications and embodiments may be devised by those skilled in the art, and it is intended that the appended claims cover all such modifications and embodiments as falling within the true spirit and scope of the present invention.

Reference throughout this specification to "one embodiment" or "an embodiment" or the like is intended to mean that a particular feature, structure, or characteristic described in connection with the exemplary embodiment is included in at least one embodiment of the invention. Thus, appearances of the phrases "in one embodiment" or "in an embodiment" or the like in various places throughout this specification are not necessarily all referring to the same embodiment.

## Claims

1. A method for change management in an entity, the method comprising
● determining the current status of the entity, wherein the current status includes determining a list of parameters associated with the entity;
● evaluating the list of parameters associated with the entity to ascertain a subset of parameters that will result in causing change to the entity;
● defining a change strategy for the entity based on at least one of the subset of parameters; and
● deploying the change strategy within the entity.

2. The method as claimed in claim 1, further comprising creating a business case of the change required for an entity from at least one subset of parameters that will result in causing the change to the entity, and wherein the subset of parameters is associated with a strategic position of the entity.

3. The method as claimed as claim 1 wherein the subset of parameters comprises at least one of the organization structure or the stakeholders or factors associated with the economic position of the entity or social factors within the entity or factors associated with the technology of the entity or leadership or management.

4. The method as claimed in claim 1, wherein creating a business cases comprises
determining the critical factors affecting change of the entity; and
assessing the critical factors to form a business case for change within the entity.

5. The method as claimed in claim 4, wherein the critical factors include one of entity reputation or entity culture or entity risk or operational costs or expected revenue generation or return on investment or impact of the entity or the capacity of the entity to change.

6. The method as claimed in claim 3 or 4, wherein assessing the critical factors includes determining a cost associated with the change for the entity.

7. The method as claimed in claim 6, wherein the cost associated with the change of the entity is optimized based on the subset of parameters.

8. The method as claimed in claim 7, wherein the optimization includes at least one of linear programming or non-linear programming or stochastic programming or convex programming or cone programming or quadratic programming.

9. A system configured to perform the method as claimed in any of the preceding claims 1 to 8.
